# FASCICULE DE BREVET EUROPEEN

(11) **EP 2 820 188 B1**
(45) Date de publication et mention de la délivrance du brevet: **07.12.2016**
(21) Numéro de dépôt: 13712850.0
(22) Date de dépôt: 26.02.2013
(51) Int. Cl.: D21H 17/37, D21H 17/54, D21H 21/10, D21H 21/18, C08F 8/28

(54) **NOUVEAU PROCEDE DE FABRICATION DE PAPIER METTANT EN OEUVRE UN COPOLYMERE BASE AYANT REAGI AVEC UN ALDEHYDE COMME AGENT DE RESISTANCE A SEC, DE RETENTION, D'EGOUTTAGE ET DE MACHINABILITE**
NEUARTIGES VERFAHREN ZUR HERSTELLUNG VON PAPIER MIT EINEM BASISCOPOLYMER NACH EINER REAKTION MIT EINEM ALDEHYD ALS TROCKENFESTIGUNGS-, AUFRECHTERHALTUNGS-, ABFLUSS- UND BEARBEITBARKEITSMITTEL
NOVEL METHOD FOR PRODUCING PAPER IMPLEMENTING A BASE COPOLYMER HAVING REACTED WITH AN ALDEHYDE AS A DRY STRENGTH, RETENTION, DRAINAGE AND MACHINABILITY AGENT

(30) Priorité: 27.02.2012 FR 1251740
(43) Date de publication de la demande: 07.01.2015
(73) Titulaire: S.P.C.M. SA, 42160 Andrézieux Bouthéon (FR)
(72) Inventeur: HUND, René, F-42390 Villars (FR); BARRIERE, Cyril, F-69700 Givors (FR)
(74) Mandataire: Cabinet Laurent & Charras
(86) Numéro de dépôt international: PCT/FR2013/050390
(87) Numéro de publication internationale: WO 2013/128109

(56) Documents cités:
- WO-A1-2007/041380
- WO-A1-2010/059946
- WO-A1-2011/015783
- WO-A2-2005/072185
- US-A1- 2006 270 801
- US-A1- 2011 056 640

## Description

L'invention concerne un nouveau procédé de fabrication de papier mettant en oeuvre en tant qu'agent de résistance à sec, de rétention, d'égouttage et de machinabilité, un produit issu de la réaction entre au moins un aldéhyde et au moins un (co)polymère base cationique ou amphotère, ledit copolymère comprenant de l'acrylamide ou dérivé et incorporant, en son sein même, au moins un composé polyfonctionnel comprenant au moins 3 hétéroatomes, dont au moins 3 de ces hétéroatomes présentent chacun au moins un hydrogène mobile.

Le document WO2011/15783 du Demandeur décrit des polymères obtenus par réaction de dégradation d'Hofmann sur un (co)polymère base. Le copolymère base contient un composé polyfonctionnel incorporé au moment de la polymérisation du (co)polymère base. Ces composés sont utilisés dans la fabrication du papier en tant qu'agent de floculation, de rétention et/ou de drainage.

Le document US20110056640 décrit un procédé de fabrication de papier mettant en oeuvre un composé issu de la réaction entre un aldéhyde et un copolymère acrylamide/chlorure de diallyldimethyl ammonium. Ce procédé n'améliore que le drainage.

Les documents WO2010/059946 et US2006/0270801 décrivent un mélange de composés permettant d'améliorer la résistance du papier. Ces mélanges comprennent un polymère glyoxalé, et éventuellement un composé polyfonctionnel.

Le document WO2005/072185 décrit un procédé de fabrication du papier mettant en oeuvre un polymère dont les fonctions amine ou amide ont réagi avec un aldéhyde.

Le document WO2007/041380 décrit un agent de résistance humide consistant en un mélange de polymères glyoxalés.

Le problème que se propose de résoudre l'invention est de mettre au point un nouveau procédé de fabrication de papier dans lequel à la fois les propriétés d'égouttage et les propriétés physiques du papier sont améliorées.

### Description de l'invention

Le Demandeur a trouvé et mis au point un nouveau procédé de fabrication d'une feuille de papier et/ou de carton et analogues, selon lequel, avant ou après formation de ladite feuille, on met en contact la matière cellulosique avec au moins un additif.

Le procédé se caractérise en ce que ledit additif est un (co)polymère cationique ou amphotère issu de la réaction entre au moins un aldéhyde et au moins un (co)polymère base comprenant au moins un monomère non ionique choisi dans le groupe comprenant l'acrylamide (et/ou le méthacrylamide), le N,N diméthylacrylamide, et/ou l'acrylonitrile, ledit copolymère base étant préalablement modifié avec au moins un composé polyfonctionnel comprenant au moins 3 hétéroatomes choisis parmi N, S, O, P, dont au moins 3 de ces hétéroatomes présentent chacun au moins un hydrogène mobile.

Dans la suite de la description et dans les revendications, on désigne :
- par additif, un agent à la fois de résistance à sec, de rétention, d'égouttage et de machinabilité,
- par (co)polymère base, le (co)polymère avant la réaction avec le composé aldéhyde,
- par (co)polymère final, le produit issu de la réaction entre le composé aldéhyde et le (co)polymère base.

Selon l'invention, la modification du (co)polymère base avec au moins un composé polyfonctionnel additionnel consiste soit à incorporer le(s) composé(s) polyfonctionnel(s) additionnel(s) avant ou pendant la polymérisation des co-monomères constitutifs du (co)polymère base, soit à greffer le(s) composé(s) polyfonctionnel(s) additionnel(s) sur le (co)polymère base.

De manière avantageuse, lorsque le composé polyfonctionnel est incorporé avant ou pendant la polymérisation, il ne réagit pas avec le monomère non ionique choisi dans le groupe comprenant l'acrylamide (et/ou le méthacrylamide), le N,N diméthylacrylamide, et/ou l'acrylonitrile. En effet, le monomère non ionique est ajouté alors que le milieu réactionnel est dans les conditions de polymérisation.

Les composés polyfonctionnels peuvent être : oligomères, polymères, chaînes carbonées comportant au moins trois atomes de carbone.

Le composé polyfonctionnel peut être un polymère issu de la polymérisation dite « template ». Il s'agit de polymères dans lesquels sont introduits, lors de leur synthèse, un polymère de bas poids moléculaire qui absorbera un des monomères entrant dans la polymérisation.

Les composés polyfonctionnels dits additionnels sont choisis dans le groupe comprenant les polyethylèneimines (PEI), les polyamines primaires, les polyamines secondaires, les polyallyamines, les polythiols, les polyalcools, les polyamides epichlorhydrine (PAE), et les polyamines amides (PAA).

Le (co)polymère final cationique ou amphotère comprend donc au moins un monomère non ionique choisi dans le groupe comprenant l'acrylamide (et/ou le méthacrylamide), le N,N diméthylacrylamide et/ou l'acrylonitrile, et est modifié, préalablement à la réaction avec un composé aldéhyde, par au moins un polymère additionnel choisi dans le groupe comprenant polyéthylèneimine, polyamine (primaire ou secondaire), polyallylamine, polythiols, polyalcools, polyamides epichlorhydrine (PAE), polyamines amides (PAA).

Dans un mode de réalisation préférentiel, le composé polyfonctionnel incorporé est choisi dans le groupe comprenant la polyéthylèneimine (PEI) et la polyamine amide (PAA).

En pratique, le (co)polymère base contient au moins 100 ppm de polymère polyfonctionnel, de préférence au moins 500 ppm, de manière plus avantageuse au moins 1000 ppm.

L'aldéhyde est choisi dans le groupe comprenant le glyoxal, le glutaraldéhyde, le furane-dialdéhyde, le 2-hydroxyadipaldéhyde, le succinaldéhyde, le dialdéhyde amidon, le 2,2 dimethoxyethanal, les composés diépoxy, et leurs combinaisons. De préférence le composé aldéhyde sera le glyoxal.

Selon une caractéristique préférée de l'invention, le (co)polymère base est ramifié au moyen d'un agent ramifiant radicalaire. Dans ce cas, on fait réagir le copolymère obtenu avec le glyoxal.

On pourra effectuer la ramification de préférence durant la polymérisation du copolymère base, en présence d'un agent ramifiant radicalaire polyfonctionnel et éventuellement d'un agent de transfert. On trouvera ci dessous une liste non limitative des ramifiants : méthylène bisacrylamide (MBA), l'ethylene glycol di-acrylate, le polyethylene glycol dimethacrylate, le diacrylamide, le cyanomethylacrylate, le vinyloxyethylacrylate ou methacrylate, la triallylamine,

En pratique, l'agent de ramification est introduit avantageusement à raison de cinq à cinquante milles (5 à 50000) parties par million en poids par rapport à la matière active, de préférence 5 à 10000, avantageusement de 5 à 5000. Avantageusement, l'agent de ramification est le méthylène bis acrylamide (MBA).

On trouvera ci-dessous une liste non limitative des agents de transfert : alcool isopropylique, hypophosphite de sodium, mercaptoethanol, etc ..

Le procédé pourra être utilisé avec succès pour la fabrication de papiers et cartons d'emballage, de papiers supports de couchage, papiers sanitaires et domestiques, de tout type de papiers, cartons ou analogues nécessitant l'utilisation d'un polymère comme agent de résistance à sec, de rétention, d'égouttage et de machinabilité.

Par machinabilité, on désigne l'optimisation du fonctionnement de la machine à papier en augmentant la productivité par un meilleur égouttage sur la table, une meilleure siccité à la section de presse, une diminution des casses par une plus grande propreté des circuits et une diminution des dépôts.

Le procédé permet par ailleurs d'obtenir de bonnes propriétés d'égouttage et de bonnes propriétés physiques (amélioration de l'éclatement, de la longueur de rupture, du ring crush test, du short span compression test, du concora médium test, de la cohésion interne, de la longueur de rupture humide).

De même, le copolymère cationique ou amphotère final mis en oeuvre dans le procédé de l'invention a une densité de charge cationique de préférence supérieure à 0,4 meq/g et avantageusement supérieure à 1,25 meq/g.

En pratique, le (co)polymère cationique ou amphotère est issu de la réaction entre:
- de 1 à 30% massique d'au moins un aldéhyde choisi préférentiellement dans le groupe comprenant le glyoxal, le glutaraldéhyde, le furane-dialdéhyde, le 2-hydroxyadipaldéhyde, le succinaldéhyde, le dialdéhyde amidon, le 2,2 dimethoxyethanal, les composés diépoxy, et leurs combinaisons,
- avec au moins un (co)polymère base éventuellement ramifié au moyen d'un agent ramifiant radicalaire et contenant :
   ∘ au moins 5 moles % d'un monomère non ionique choisi dans le groupe comprenant l'acrylamide (et/ou le méthacrylamide), le N, N diméthylacrylamide et/ou l'acrylonitrile, préférentiellement l'acrylamide,
   ∘ au moins 100 ppm d'au moins un composé polyfonctionnel additionnel choisi dans le groupe comprenant polyéthylèneimine, polyamine (primaire ou secondaire), polyallylamine, polythiols, les polyalcools, polyamides epichlorhydrine (PAE), polyamines amides (PAA) avantageusement polyethylèneimine,
   ∘ optionnellement au moins :
      ▪ un monomère éthylénique cationique non saturé, choisi préférentiellement dans le groupe comprenant les monomères de type dialkylaminoalkyl (meth)acrylamide, diallylamine, methyldiallylamine et leurs sel d'ammonium quaternaire ou d'acides. On citera en particulier le chlorure de dimethyldiallylammonium (DADMAC), le chlorure d'acrylamidopropyltrimethylammonium (APTAC) et/ou le chlorure de methacrylamidopropyltrimethylammonium (MAPTAC),
      ▪ et/ou un monomère non ionique choisi préférentiellement dans le groupe comprenant le N-vinyl acetamide, N-vinyl formamide, la N-vinylpyrrolidone et/ou le vinyl acétate,
      ▪ et/ou un monomère anionique de type acide ou anhydride choisi dans le groupe comprenant l'acide (méth)acrylique, l'acide acrylamidomethylpropyl sulfonique, l'acide itaconique, l'anhydride maléique, l'acide maléique, l'acide méthallyl sulfonique, l'acide vinylsulfonique et leurs sels.

Avantageusement, le (co)polymère cationique ou amphotère final est issu de la réaction de préférence :
- 15 à 25% massique de glyoxal,
- d'un (co)polymère base ramifié au moyen d'un agent ramifiant radicalaire et comprenant :
   ∘ au moins 5 moles % d'acrylamide,
   ∘ au moins 100 ppm de polyéthylèneimine,
   ∘ 5 à 50 moles %, d'au moins un co-monomère éthylénique cationique non saturé, choisi dans le groupe comprenant les monomères de type dialkylaminoalkyl (meth)acrylamide, diallylamine, methyldiallylamine et leurs sel d'ammonium quaternaire ou d'acides, de préférence le chlorure de dimethyldiallylammonium,
   ∘ Au moins 100 ppm d'un agent ramifiant radicalaire.

II est important de noter que, en association avec ces monomères, il est également possible d'utiliser des monomères insolubles dans l'eau tels que les monomères acryliques, allyliques ou vinyliques comportant un groupement hydrophobe. Lors de leur utilisation, ces monomères seront employés dans des quantités très faibles, inférieures à 20 moles%, de préférence inférieures à 10 moles%, et ils seront choisis préférentiellement dans le groupe comprenant les dérivés de l'acrylamide comme les N-alkylacrylamide par exemple le N-tert-butylacrylamide, l'octylacrylamide ainsi que les N,N-dialkylacrylamides comme le N,N-dihexylacrylamide...les dérivés d'acide acrylique comme les alkyl acrylates et méthacrylates...

Selon un mode de réalisation préféré, le copolymère base mis en oeuvre dans l'invention est un copolymère d'un monomère non ionique et d'un monomère cationique.

L'incorporation du composé polyfonctionnel additionnel modifiant la structure du (co)polymère base pourra se faire dans le milieu réactionnel avant ou en cours de polymérisation, ou par tout autre méthode de greffage sur le copolymère base fini. De manière avantageuse, le composé polyfonctionnel ne réagit pas avec les monomères avant que ceux-ci ne soient polymérisés.

De façon préférentielle, le composé polyfonctionnel additionnel sera mélangé à un comonomère avant polymérisation.

Avantageusement, durant le procédé, la quantité de (co)polymère final introduite dans la suspension fibreuse est comprise entre 500 et 4000 grammes de polymère actif par tonne de pâte sèche (g/t). De préférence, la quantité introduite est comprise entre 1000 g/t et 3000 g/t.

Le (co)polymère base ne nécessite pas le développement de procédé de polymérisation particulier. Les principales techniques de polymérisation, bien connues par l'homme de métier et pouvant être utilisées sont : la polymérisation par précipitation, la polymérisation en émulsion (aqueuse ou inverse) suivie ou non d'une étape de distillation et/ou de spray drying, et la polymérisation en suspension ou la polymérisation en solution, ces deux techniques étant préférées.

La glyoxalation ne nécessite pas de méthode particulière. Les principales techniques de glyoxalation connues de l'homme de métier peuvent être utilisées. Par exemple, le pH pourra être ajusté après addition de glyoxal avec une solution de soude. Il est aussi possible de conduire la réaction à pH contrôlé par addition continue de soude, mais aussi d'additionner le glyoxal en plusieurs fractions. L'avancement de la réaction pourra aussi être suivi par une mesure de viscosité, de turbidité... etc.

Selon l'invention, l'additif est ajouté dans le procédé, avant ou après formation de la feuille. Ainsi, la mise en contact de la matière cellulosique avec l'additif peut être effectuée de différentes manières. Le (co)polymère final pourra être utilisé sous forme de solution aqueuse diluée ou non diluée. Il sera ajouté à la matière cellulosique. Il pourra être appliqué par une technique d'imprégnation, ou pourra être directement ajouté dans la suspension fibreuse à tout endroit du procédé de fabrication du papier où habituellement des agents de résistance à sec sont introduits.

Il pourra être introduit dans la pâte épaisse (thick stock) ou dans la pâte diluée (thin stock). Il pourra être ajouté au niveau de la fan pump ou de la caisse de tête. Préférentiellement le (co)polymère sera introduit avant la caisse de tête.

Il pourra aussi être au niveau de la table de formation ou de la size presse, par exemple par spray.

L'incorporation ou l'application du (co)polymère final se fera avec les moyens conventionnels connus de l'homme de l'art.

Préférentiellement, le (co)polymère final est injecté industriellement dans la suspension fibreuse, i.e. avant sa dilution par les eaux blanches (pâte épaisse). Les concentrations de la pâte sont de l'ordre de 3% et 5%.

Le procédé pourra être utilisé avec des pâtes de fibres vierges (Kraft, Bisulfite..), de fibres recyclées, pâtes désencrées, pâtes mécaniques et thermomécaniques.

Le (co)polymère final pourra de manière être préparé à proximité de la machine à papier.

L'invention et les avantages qui en découlent ressort bien des exemples de réalisation suivants.

### Exemples de réalisation

### Protocole de synthèse du composé de l'invention

### Synthèse du (co)polymère base modifié avec de la PEI pendant la polymérisation

Les polymères de l'invention identifiés parmi les polymères 1 à 17 ont été obtenus à partir d'un copolymère base modifié avec de la PEI pendant la polymérisation selon le protocole suivant.

Les exemples ont été effectués avec un copolymère acrylamide et chlorure de dimethyldiallyl ammonium (DADMAC), ramifié avec du MBA (1000 ppm / matière active), modifié avec un polymère de polyéthylèneimine (de type Polymin HM de BASF), à hauteur de 1% par rapport à la matière active. Pour ce faire, la polyéthylèneimine est mélangée au monomère de DADMAC et au MBA dans le réacteur. L'acrylamide sera incorporée en coulée continu pendant 2h, dans un milieu réactionnel maintenu à 85°C. La catalyse se fera au SPS et au MBS, catalyseurs bien connus de l'homme de métier.

### Synthèse du (co)polymère base avec post-greffage de la PEI

Dans le cas du post-greffage du (co)polymère les exemples (polymères 19 et 20) ont été effectués de la même manière que ci-dessus, à la différence que la polyéthylèneimine n'est pas mélangée au monomère dans le réacteur. Pour ce faire, la polyéthylèneimine est ajoutée dans le réacteur après la polymérisation à hauteur de 1% par rapport à la matière active. Le greffage se fait par catalyse à l'aide de 1500 ppm de SPS en coulée continue pendant 1h30.

### Glyoxalation

Dans un réacteur agité de 600 ml, 154.3 g de copolymère base (20% de concentration, 3800 cps) et 626.6 g d'eau déminéralisée sont introduits. Le réacteur est équipé d'une sonde de mesure de pH. Après 10 minutes d'agitation le pH est ajusté à 10.5 avec une solution de soude à 10%. La température est maintenue entre 24 et 26°C.

19.0 g de glyoxal à 40% sont additionnés. La valeur de pH est de 8.75. Un contrôle du pH et un suivi de la viscosité permettent d'obtenir un produit de 52 cps après 65 minutes de réaction. Lorsque la viscosité souhaitée est atteinte, on stoppe la réaction par un abaissement du pH à moins de 3,5 par addition de H2SO4 92%.

Le pH peut être ajusté après addition de glyoxal avec une solution de soude 10%. Il est possible de conduire la réaction à pH contrôlé par addition continue de soude 10%, mais aussi d'additionner le glyoxal en plusieurs fractions.

Le viscosimètre utilisé est de type Brookfield, avec un module LV1 et une vitesse de 60 rpm.

### Préparation de la pâte

La pâte utilisée est constituée de fibres de cartons recyclées. La pâte à papier est préparée en désintégrant pendant 30 minutes 90 grammes de fibres recyclées dans 2 litres d'eau chaude. Le degré Shopper de la pâte ainsi obtenue est de 43. Les tests sont réalisés avec la pâte à pH neutre. La pâte obtenue est ensuite diluée jusqu'à un volume total de 9 litres. Une fois la consistance mesurée précisément, la quantité nécessaire de cette pâte est prélevée de manière à obtenir au final une feuille avec un grammage de 120g/m2.

### Test des propriétés des polymères

### A/ Performances d'égouttage

Séquence CSF à 1000 rpm (tours par minute) :
Utilisation d'une formette statique pour réaliser l'agitation de la pâte. Introduction de 1 litre de pâte à 0,3 %.
T=0s : mise en agitation de la pâte
T=10s : ajout du polymère
T=30s : arrêt de l'agitation et récupération du litre de pâte. Réalisation du test TAPPI T 227OM-94.
CSF : mesure du degré " d'égouttabillité " de la pâte

### B/ Performances en application DSR (résistance à sec), grammage à 60g/m2

### 1/ Formation de la feuille

Les formettes de papier sont réalisées avec une formette dynamique automatique. La pâte est introduite dans le cuvier de la formette dynamique, diluée jusqu'à une consistance de 0,32% et agitée modérément avec un agitateur mécanique afin d'homogénéiser la suspension fibreuse. En mode manuel, la pâte est pompée jusqu'au niveau de la buse afin d'amorcer le circuit. Un buvard et la toile de formation sont placés dans le bol de la formette dynamique avant de démarrer la rotation du bol à 900m/min et de construire le mur d'eau. Le copolymère final est alors introduit dans la suspension fibreuse agitée avec un temps de contact de 30 secondes La feuille est alors réalisée (en mode automatique) par 22 allers-retours de la buse projetant la pâte dans le mur d'eau. Une fois que l'eau est drainée et que la séquence automatique est terminée, la toile de formation avec le réseau de fibres formé est retirée du bol de la formette dynamique et placée sur une table. Un buvard sec est déposé du côté du matelas de fibres humides et est pressé une fois avec un rouleau. L'ensemble est retourné et la toile est délicatement séparée du matelas fibreux. Un second buvard sec est déposé et la feuille (entre les deux buvards) est pressée une fois sous une presse délivrant 4 bars puis est séchée sur un sécheur tendu pendant 9 min à 107°C. Les deux buvards sont ensuite retirés et la feuille est stockée pendant une nuit dans une pièce à humidité et température contrôlées (50% d'humidité relative et 23 °C). Les propriétés de résistance à sec de toutes les feuilles obtenues par cette procédure sont alors évaluées.

### 2/ Test d'éclatement

L'éclatement (Burst index) est mesuré avec un éclatomètre Messmer Buchel M 405 (moyenne sur 14 mesures). Le test est effectué selon la norme TAPPI T403 OM 91

### 3/ Test de traction à sec

La longueur de rupture est mesurée à l'aide d'un dynamomètre testometric AXM250. Le test est effectué selon la norme TAPPI 494 OM 88.

### Cas du (co)polymère base modifié avec de la PEI pendant la polymérisation

Dans tous les exemples qui suivent, et sauf indication contraire, les feuilles de papier sont réalisées selon la procédure ci-dessus en introduisant le copolymère final à un dosage de 2.5 kg/T (polymère sec / fibre sèche).

**Tableau 1 : caractéristiques et résultats des tests des polymères de hautes viscosités**

| | | | | | | Dosage : 1.5 kg/T | | | Dosage : 2.5 kg/T | | |
|---|---|---|---|---|---|---|---|---|---|---|---|
| Polymères | Cationicité base (mol%) | Viscosité base (cPs) | Viscosité produit glyoxalé (cPs) | MBA (ppm /MA base) | PEI (ppm /MA base) | CSF (ml) | indice d'éclate ment | Traction à sec (km) | CSF (ml) | indice d'éclate ment | Traction à sec (km) |
| Blanc | | | | | | 270 | 1.99 | 3.82 | 270 | 1.99 | 3.82 |
| Polymère 2 | 15% | 3700 | 50,5 | 0 | 0 | 420 | 2.28 | 4.24 | 488 | 2,56 | 4,71 |
| Polymère 3 | 15% | 3250 | 52,0 | 1000 | 0 | 431 | 2.25 | 4.12 | 495 | 2,27 | 4,40 |
| Polymère 4 (invention) | 15% | 3800 | 53,0 | 1000 | 1000 | 440 | 2.32 | 4.65 | 504 | 2,58 | 4,77 |

La ramification seule du copolymère base glyoxalé et dépourvu de PEI (polymère 3) permet d'obtenir une amélioration des performances d'égouttage, mais est préjudiciable à l'amélioration des propriétés physiques. Le procédé de l'invention permet, quant à lui d'obtenir une amélioration de l'égouttage supérieur aux autres produits tout en conservant, voire même tout en améliorant les propriétés physiques à sec.

**Tableau 2 : caractéristiques et résultats des tests des polymères de basses viscosités**

| Polymères | Cationicité base (mol%) | Viscosité base (cPs) | Viscosité produit glyoxalé (cPs) | MBA (ppm/MA base) | PEI (ppm/MA base) | CSF (ml) | indice d'éclatement | Longueur de rupture (km) |
|---|---|---|---|---|---|---|---|---|
| Blank | | | | | | 272 | 1.69 | 3.28 |
| Polymère 5 | 15% | 485 | 51,5 | 0 | 0 | 465 | 2,29 | 4,89 |
| Polymère 6 | 15% | 720 | 52,0 | 1000 | 0 | 468 | 2,23 | 4,82 |
| Polymère 7 (invention) | 15% | 500 | 49,0 | 1000 | 1000 | 489 | 2,32 | 4,97 |
| | | | | | | | | |
| Polymère 8a | 15% | 485 | 49,0 | 0 | 1000* | 454 | 2,27 | 4.90 |
| Polymère 8b | 15% | 485 | 49.5 | 0 | 1000** | 453 | 2.25 | 4.85 |

| | | | | | | | | |
|---|---|---|---|---|---|---|---|---|
| 1000* PEI additionnée au copolymère ayant réagi avec le composé aldéhyde. 1000** PEI additionnée au copolymère avant réaction avec le composé aldéhyde. Il ne s'agit pas d'un greffage nécessitant des conditions réactionnelles spécifiques. La PEI est simplement mélangée avec le copolymère. | | | | | | | | |

Cette seconde série d'essais démontre que la tendance d'amélioration des résultats reste identique lors de l'utilisation de copolymères base de plus basse viscosité (polymères 5 et 6). Les résultats obtenus avec le polymère 8a et 8b sont inférieurs à ceux du polymère de l'invention. Ces résultats démontrent l'importance de la présence de la PEI lors de la polymérisation du copolymère base et son incorporation dans la structure du copolymère base.

**Tableau 3 : caractéristiques et résultats des tests des polymères l'invention avec une augmentation de cationicité.**

| Polymères | Cationicité base (mol%) | Viscosité base (cPs) | Viscosité produit glyoxalé (cPs) | MBA (ppm/MA base) | PEI (ppm/MA base) | CSF | indice d'éclate ment | Longueur de rupture (km) |
|---|---|---|---|---|---|---|---|---|
| Blanc | | | | | | 277 | 1.82 | 3.90 |
| Polymère 9 | 5% | 2050 | 43,5 | 0 | 0 | 341 | 2,14 | 4,53 |
| Polymère 10 | 5% | 1200 | 50,5 | 1000 | 1000 | 355 | 2,17 | 4,73 |
| Polymère 11 | 15% | 3800 | 53,0 | 1000 | 1000 | 445 | 2,36 | 4,95 |
| Polymère 12 | 30% | 4200 | 50,5 | 1000 | 1000 | 449 | 2,46 | 4,86 |
| Polymère 13 | 30% | 3850 | 51.5 | 0 | 0 | 430 | 2.32 | 4.72 |
| Polymère 14 | 40% | 1600 | 48,5 | 1000 | 1000 | 448 | 2,38 | 4,73 |

Le tableau ci-dessus montre l'évolution des résultats par rapport à l'augmentation de la cationicité du polymère base. Les polymères de l'invention sont tous meilleurs que le polymère 9.

En comparant les performances des polymères 9 et 10 de même cationicité, on observe de façon surprenante qu'avec un poids moléculaire plus bas dans le cadre de l'invention (polymère 10), on peut obtenir des meilleurs résultats d'égouttage et de résistance à sec.

Avec un poids moléculaire similaire (copolymère base), les polymères 10 et 14 présentent des performances différentes. Le polymère 14, qui a une cationicité de 40 mole%, donne des résultats supérieurs que ce soit en égouttage ou éclatement (Burst Index) au polymère 10 (5 mole% de cationicité).

Il convient de noter que le bénéfice de l'invention s'applique quelle que soit la cationicité du produit. En effet, en comparant les polymères 12 et 13, tous deux de même cationicité (30 mole%), on constate que le polymère de l'invention (polymère 12) donne les meilleures performances d'égouttage et de propriétés physiques.

| Polymères | Cationicité base (mol%) | Viscosité produit glyoxalé (cPs) | MBA (ppm/MA base) | PEI (ppm/MA base) | CSF | indice d'éclatement | Longueur de rupture (km) |
|---|---|---|---|---|---|---|---|
| Blank | | | | | *272,00* | *1,69* | *3,28* |
| Polymère 15 | 30% | 42,0 | 1000 | 1000 | 451 | 2,34 | 5,01 |
| Polymère 16 | 30% | 53,0 | 1000 | 1000 | 540 | 2,19 | 4,42 |
| Polymère 17 | 30% | 32,0 | 0 | 0 | 428 | 2,16 | 4,10 |

Le polymère 17 correspond à l'exemple 7 du brevet US20110056640 qui a été reproduit puis testé.

Le tableau ci-dessus montre que deux polymères (polymères 15 et 16) issus de l'invention, glyoxalés à deux viscosités différentes, présentent des performances supérieures au polymère 17, de même cationicité.

### Cas du (co)polymère base modifié avec de la PEI par post-greffage

Les polymères 19 et 20 ont été fabriqués à partir du (co)polymère base avec post-greffage de la PEI. Plus précisément, on effectue la polymérisation de l'acrylamide et du DADMAC en présence de MBA. Le polymère obtenu est alors séparé en trois fractions.

La première fraction réagit avec le glyoxal de la façon décrite précédemment : échantillon 18.

Dans la deuxième fraction, on ajoute de la PEI ainsi qu'un initiateur (SPS), en coulée continue durant 90 minutes à 80°C, dans le but de post-greffer la PEI. Cet échantillon a été glyoxalé selon le processus standard: Echantillon 19.

La troisième fraction a été traitée de la même façon que pour l'échantillon 19, mais sans l'addition de la PEI. Le but est d'évaluer l'impact de l'addition en continue du SPS. La gloxalation est identique aux exemples 18 et 19.

| | | | | | | Dosage 2 kg/T | Dosage : 2.5 kg/T |
|---|---|---|---|---|---|---|---|
| Polymères | Cationicité base (mol%) | Viscosité base (cPs) | Viscosité produit glyoxalé (cPs) | MBA (ppm /MA base) | PEI (ppm/MA base) | CSF (ml) | CSF (ml) |
| Polymère 18 | 22% | 1200 | 125 | 1000 | 0 | 3 | 421 |
| Polymère 19 | 77% | 1200 | 125 | 1000 | 1000 | 462 | 432 |
| Polymère 20 | 22% | 1200 | 120 | 1000 | 0 | 441 | 407 |

Les résultats (égouttage au CSF) montrent un gain de performance si l'on compare le polymère 18 (base sans PEI) et le polymère 19 (base PEI post-greffée). Le polymère 20 a des performances inférieures au polymère 18, signe d'une dégradation du polymère lors de l'addition du SPS durant 90 minutes à 80°C. C'est donc bien le post-greffage de la PEI qui apporte ce gain en performance.

## Revendications

1. Procédé de fabrication d'une feuille de papier et/ou de carton et analogues, selon lequel, avant ou après formation de ladite feuille, on met en contact la matière cellulosique avec au moins un additif, **caractérisé en ce que** ledit additif est un (co)polymère cationique ou amphotère issu de la réaction entre au moins un aldéhyde et au moins un (co)polymère base comprenant au moins un monomère non ionique choisi dans le groupe comprenant l'acrylamide (et/ou le méthacrylamide), le N,N diméthylacrylamide, et/ou l'acrylonitrile, ledit copolymère base étant préalablement modifié avec au moins un composé polyfonctionnel comprenant au moins 3 hétéroatomes choisis parmi N, S, O, P, dont au moins 3 de ces hétéroatomes présentent chacun au moins un hydrogène mobile ;
le (co)polymère base étant modifié avec au moins un composé polyfonctionnel soit par incorporation de(s) composé(s) polyfonctionnel(s) additionnel(s) avant ou pendant la polymérisation des co-monomères constitutifs du (co)polymère base, soit par greffage de(s) composé(s) polyfonctionnel(s) additionnel(s) sur le (co)polymère base ;
le(s) composé(s) polyfonctionnel(s) étant choisis dans le groupe comprenant les polyethylèneimines (PEI), les polyamines primaires, les polyamines secondaires, les polyallyamines, les polythiols, les polyalcools, les polyamides epichlorhydrine (PAE), et les polyamines amides (PAA) ;
l'aldéhyde étant choisi dans le groupe comprenant le glyoxal, le glutaraldéhyde, le furane-dialdéhyde, le 2-hydroxyadipaldéhyde, le succinaldéhyde, le dialdéhyde amidon, le 2,2 dimethoxyethanal, les composés diépoxy, et leurs combinaisons.

2. Procédé selon la revendication 1, **caractérisé en ce que** le composé polyfonctionnel est choisi dans le groupe comprenant la polyéthylèneimine (PEI) et la polyamine amide (PAA).

3. Procédé selon l'une des revendications précédentes, **caractérisé en ce que** le copolymère base est ramifié en présence d'un agent ramifiant radicalaire.

4. Procédé selon la revendication 3, **caractérisé en ce que** l'agent ramifiant radicalaire est choisi dans le groupe comprenant le méthylène bisacrylamide (MBA), l'ethylene glycol di-acrylate, le polyethylene glycol dimethacrylate, le diacrylamide, le cyanomethylacrylate, le vinyloxyethylacrylate ou methacrylate, et la triallylamine.

5. Procédé selon la revendication 1, **caractérisé en ce que** l'aldéhyde est le glyoxal.

6. Procédé selon l'une des revendications 1 à 4, **caractérisé en ce que** le (co)polymère cationique ou amphotère est issu de la réaction entre:
- de 1 à 30% massique d'au moins un aldéhyde,
- avec au moins un (co)polymère base éventuellement ramifié au moyen d'un agent ramifiant radicalaire et contenant :
∘ au moins 5 moles % d'un monomère non ionique choisi dans le groupe comprenant l'acrylamide (et/ou le méthacrylamide), le N, N diméthylacrylamide et/ou l'acrylonitrile,
∘ au moins 100 ppm d'au moins un composé polyfonctionnel.

7. Procédé selon l'une des revendications 1 à 4, **caractérisé en ce que** le (co)polymère cationique ou amphotère est issu de la réaction entre:
- de 1 à 30% massique d'au moins un aldéhyde choisi dans le groupe comprenant le glyoxal, le glutaraldéhyde, le furane-dialdéhyde, le 2-hydroxyadipaldéhyde, le succinaldéhyde, le dialdéhyde amidon, le 2,2 dimethoxyethanal, les composés diépoxy, et leurs combinaisons,
- avec au moins un (co)polymère base éventuellement ramifié au moyen d'un agent ramifiant radicalaire et contenant :
∘ au moins 5 moles % d'un monomère non ionique choisi dans le groupe comprenant l'acrylamide (et/ou le méthacrylamide), le N, N diméthylacrylamide et/ou l'acrylonitrile,
∘ au moins 100 ppm d'au moins un composé polyfonctionnel additionnel choisi dans le groupe comprenant polyéthylèneimine, polyamine (primaire ou secondaire), polyallylamine, polythiols, les polyalcools, polyamides epichlorhydrine (PAE), polyamines amides (PAA) avantageusement polyethylèneimine,
∘ au moins :
▪ un monomère éthylénique cationique non saturé, choisi dans le groupe comprenant les monomères de type dialkylaminoalkyl (meth)acrylamide, diallylamine, methyldiallylamine et leurs sel d'ammonium quaternaire ou d'acides, et en particulier le chlorure de dimethyldiallylammonium (DADMAC), le chlorure d'acrylamidopropyltrimethylammonium (APTAC) et/ou le chlorure de methacrylamidopropyltrimethylammonium (MAPTAC),
▪ et/ou un monomère non ionique choisi dans le groupe comprenant le N-vinyl acetamide, N-vinyl formamide, la N- vinylpyrrolidone et/ou le vinyl acétate,
▪ et/ou un monomère anionique de type acide ou anhydride choisi dans le groupe comprenant l'acide (méth)acrylique, l'acide acrylamidomethylpropyl sulfonique, l'acide itaconique, l'anhydride maléique, l'acide maléique, l'acide méthallyl sulfonique, l'acide vinylsulfonique et leurs sels.

8. Procédé selon l'une des revendications 1 à 5, **caractérisé en ce que** le (co)polymère cationique ou amphotère final est issu de la réaction de :
- 15 à 25% massique de glyoxal,
- d'un (co)polymère base ramifié au moyen d'un agent ramifiant radicalaire et comprenant :
∘ au moins 5 moles % d'acrylamide,
∘ au moins 100 ppm de polyéthylèneimine,
∘ 5 à 50 moles %, d'au moins un co-monomère éthylénique cationique non saturé, choisi dans le groupe comprenant les monomères de type dialkylaminoalkyl (meth)acrylamide, diallylamine, methyldiallylamine et leurs sel d'ammonium quaternaire ou d'acides, de préférence le chlorure de dimethyldiallylammonium,
∘ au moins 100 ppm d'un agent ramifiant radicalaire.

## Patentansprüche

1. Verfahren zum Herstellen eines Blattes aus Papier und/oder Pappe und dergleichen, gemäß dem man das Cellulosematerial vor oder nach der Bildung des Blattes mit mindestens einem Zusatzstoff in Kontakt bringt, **dadurch gekennzeichnet, dass** der Zusatzstoff ein kationisches oder amphoteres (Co)polymer ist, hervorgegangen aus der Reaktion zwischen mindestens einem Aldehyd und mindestens einem Basis(Co)polymer, umfassend mindestens ein nicht ionisches Monomer, ausgewählt aus der Gruppe umfassend Acrylamid (und/oder Methacrylamid), N,N-Dimethylacrylamid und/oder Acrylnitril, wobei das Basiscopolymer vorher mit mindestens einer polyfunktionellen Verbindung, umfassend mindestens 3 Heteroatome, ausgewählt aus N, S, O, P, von denen mindestens 3 dieser Heteroatome jeweils mindestens einen beweglichen Wasserstoff aufweisen, modifiziert wird;
wobei das Basis(Co)polymer mit mindestens einer polyfunktionellen Verbindung modifiziert wird, entweder durch Einbau der zusätzlichen polyfunktionellen Verbindung(en) vor oder während der Polymerisation der konstitutiven Co-Monomere des Basis(Co)polymers, oder durch Pfropfung der zusätzlichen polyfunktionellen Verbindung(en) auf das Basis(Co)polymer;
wobei die polyfunktionelle Verbindung bzw. polyfunktionellen Verbindungen ausgewählt sind aus der Gruppe umfassend Polyethylenimine (PEI), primäre Polyamine, sekundäre Polyamine, Polyallylamine, Polythiole, Polyalkohole, Polyamid-Epichlorhydrine (PAE) und Polyaminamide (PAA);
wobei der Aldehyd ausgewählt ist aus der Gruppe umfassend Glyoxal, Glutaraldehyd, Furandialdehyd, 2-Hydroxyadipaldehyd, Succinaldehyd, Dialdehydstärke, 2,2 Dimethoxyethanal, Diepoxyverbindungen und Kombinationen davon.

2. Verfahren nach Anspruch 1, **dadurch gekennzeichnet, dass** die polyfunktionelle Verbindung ausgewählt ist aus der Gruppe umfassend Polyethylenimin (PEI) und Polyaminamid (PAA).

3. Verfahren nach einem der vorhergehenden Ansprüche, **dadurch gekennzeichnet, dass** das Basiscopolymer in Gegenwart eines Radikalverzweigungsmittels verzweigt ist.

4. Verfahren nach Anspruch 3, **dadurch gekennzeichnet, dass** das Radikalverzweigungsmittel ausgewählt ist aus der Gruppe umfassend Methylenbisacrylamid (MBA), Ethylenglycoldiacrylat, Polyethylenglycoldimethacrylat, Diacrylamid, Cyanomethylacrylat, Vinyloxyethylacrylat oder -methacrylat und Triallylamin.

5. Verfahren nach Anspruch 1, **dadurch gekennzeichnet, dass** das Aldehyd Glyoxal ist.

6. Verfahren nach einem der Ansprüche 1 bis 4, **dadurch gekennzeichnet, dass** das kationische oder amphotere (Co)polymer aus der Reaktion hervorgeht zwischen:
- von 1 bis 30 Masse-% mindestens eines Aldehyds,
- mit mindestens einem Basis(Co)polymer, das gegebenenfalls mittels eines Radikalverzweigungsmittels verzweigt ist und:
∘ mindestens 5 Mol-% eines nicht ionischen Monomers ausgewählt aus der Gruppe umfassend Acrylamid (und/oder Methacrylamid), N,N-Dimethylacrylamid und/oder Acrylnitril,
∘ mindestens 100 ppm mindestens einer polyfunktionellen Verbindung, enthält.

7. Verfahren nach einem der Ansprüche 1 bis 4, **dadurch gekennzeichnet, dass** das kationische oder amphotere (Co)polymer aus der Reaktion hervorgeht zwischen:
- von 1 bis 30 Masse-% mindestens eines Aldehyds ausgewählt aus der Gruppe umfassend Glyoxal, Glutaraldehyd, Furandialdehyd, 2-Hydroxyadipaldehyd, Succinaldehyd, Dialdehydstärke, 2,2 Dimethoxyethanal, Diepoxyverbindungen und Kombinationen davon,
- mit mindestens einem Basis(Co)polymer, das gegebenenfalls mittels eines Radikalverzweigungsmittels verzweigt ist und enthält:
∘ mindestens 5 Mol-% eines nicht ionischen Monomers ausgewählt aus der Gruppe umfassend Acrylamid (und/oder Methacrylamid), N,N-Dimethylacrylamid und/oder Acrylnitril,
∘ mindestens 100 ppm mindestens einer zusätzlichen polyfunktionellen Verbindung ausgewählt aus der Gruppe umfassend Polyethylenimin, Polyamin (primär oder sekundär), Polyallylamin, Polythiole, Polyalkohole, Polyamid-Epichlorhydrine (PAE), Polyaminamide (PAA) vorteilhafterweise Polyethylenimin,
∘ mindestens:
▪ ein ungesättigtes kationisches Ethylenmonomer, ausgewählt aus der Gruppe umfassend die Monomere vom Typ Dialkylaminoalkyl(meth)acrylamid, Diallylamin, Methyldiallylamin und deren quaternäre Ammonium- oder Säuresalze, und insbesondere Dimethyldiallylammoniumchlorid, Acrylamidopropyltrimethylammoniumchlorid (APTAC) und/oder Methacrylamidopropyltrimethylammoniumchlorid (MAPTAC),
▪ und/oder ein nicht ionisches Monomer ausgewählt aus der Gruppe, umfassend N-Vinylacetamid, N-Vinylformamid, N-Vinylpyrrolidon und/oder Vinylacetat,
▪ und/oder ein anionisches Säure- oder Anhydrid-Monomer ausgewählt aus der Gruppe umfassend (Meth)acrylsäure, Acrylamidomethylpropylsulfonsäure, Itaconsäure, Maleinsäureanhydrid, Maleinsäure, Methallylsulfonsäure, Vinylsulfonsäure und Salze davon.

8. Verfahren nach einem der Ansprüche 1 bis 5, **dadurch gekennzeichnet, dass** das endgültige kationische oder amphotere (Co)polymer aus der Reaktion hervorgeht zwischen:
- 15 bis 25 Masse-% Glyoxal,
- von einem Basis(Co)polymer, das mittels eines Radikalverzweigungsmittels verzweigt ist und umfasst:
∘ mindestens 5 Mol-% Acrylamid,
∘ mindestens 100 ppm Polyethylenimin,
∘ 5 bis 50 Mol-%, mindestens eines ungesättigten kationischen Ethylen(co)monomers, ausgewählt aus der Gruppe umfassend die Monomere vom Typ Dialkylaminoalkyl(meth)acrylamid, Diallylamin, Methyldiallylamin und deren quaternäre Ammonium- oder Säuresalze, vorzugsweise Dimethyldiallylammoniumchlorid,
∘ mindestens 100 ppm eines Radikalverzweigungsmittels.

## Claims

1. Process for manufacturing a sheet of paper and/or of paperboard and the like, according to which, before or after formation of said sheet, the cellulosic material is brought into contact with at least one additive, **characterized in that** said additive is a cationic or amphoteric (co)polymer derived from the reaction between at least one aldehyde and at least one base (co)polymer comprising at least one nonionic monomer selected from the group comprising acrylamide (and/or methacrylamide), N,N-dimethylacrylamide, and/or acrylonitrile, said base copolymer being beforehand modified with at least one polyfunctional compound comprising at least three heteroatoms chosen from N, S, O and P, in which at least three of these heteroatoms each have at least one mobile hydrogen;
the base (co)polymer being modified with at least one polyfunctional compound either by incorporation of additional polyfunctional compound(s) before or during the polymerization of the constituent comonomers of the base (co)polymer, or by grafting of additional polyfunctional compound(s) to the base (co)polymer;
the polyfunctional compound(s) being selected from the group comprising polyethyleneimines (PEI), primary polyamines, secondary polyamines, polyallylamines, polythiols, polyalcohols, polyamide-epichlorohydrin (PAE) and polyamine amides (PAA);
the aldehyde being selected from the group comprising glyoxal, glutaraldehyde, furandialdehyde, 2-hydroxyadipaldehyde, succinaldehyde, dialdehyde starch, 2,2-dimethoxyethanal, diepoxy compounds, and combinations thereof.

2. Process according to Claim 1, **characterized in that** the polyfunctional compound is selected from the group comprising polyethyleneimine (PEI) and polyamine amide (PAA).

3. Process according to one of the preceding claims, **characterized in that** the base copolymer is branched in the presence of a radical branching agent.

4. Process according to Claim 3, **characterized in that** the radical branching agent is selected from the group comprising methylenebisacrylamide (MBA), ethylene glycol diacrylate, polyethylene glycol dimethacrylate, diacrylamide, cyanomethyl acrylate, vinyloxyethyl acrylate or methacrylate and triallylamine.

5. Process according to Claim 1, **characterized in that** the aldehyde is glyoxal.

6. Process according to one of Claims 1 to 4, **characterized in that** the cationic or amphoteric (co)polymer is derived from the reaction between:
- from 1 to 30 wt% of at least one aldehyde,
- with at least one base (co)polymer optionally branched by means of a radical branching agent and containing:
∘ at least 5 mol% of a nonionic monomer selected from the group comprising acrylamide (and/or methacrylamide), N,N-dimethylacrylamide, and/or acrylonitrile,
∘ at least 100 ppm of at least one polyfunctional compound.

7. Process according to one of Claims 1 to 4, **characterized in that** the cationic or amphoteric (co)polymer is derived from the reaction between:
- from 1 to 30 wt% of at least one aldehyde selected from the group comprising glyoxal, glutaraldehyde, furandialdehyde, 2-hydroxyadipaldehyde, succinaldehyde, dialdehyde starch, 2,2-dimethoxyethanal, diepoxy compounds, and combinations thereof,
- with at least one base (co)polymer optionally branched by means of a radical branching agent and containing:
∘ at least 5 mol% of a nonionic monomer selected from the group consisting of acrylamide (and/or methacrylamide), N,N-dimethylacrylamide, and/or acrylonitrile,
∘ at least 100 ppm of at least one additional polyfunctional compound selected from the group comprising polyethyleneimine, polyamine (primary or secondary), polyallylamine, polythiols, polyalcohols, polyamide-epichlorohydrin (PAE), polyamine amides (PAA), advantageously polyethyleneimine,
∘ at least:
▪ one unsaturated cationic ethylenic monomer, selected from the group comprising monomers of dialkylaminoalkyl (meth)acrylamide, diallylamine and methyldiallylamine type and the quaternary ammonium or acid salts thereof, and in particular diallyldimethylammonium chloride (DADMAC), acrylamidopropyltrimethylammonium chloride (APTAC) and/or methacrylamidopropyltrimethylammonium chloride (MAPTAC),
▪ and/or a nonionic monomer selected from the group comprising N-vinyl acetamide, N-vinyl formamide, N-vinylpyrrolidone and/or vinyl acetate,
▪ and/or an anionic monomer of acid or anhydride type selected from the group comprising (meth)acrylic acid, acrylamidomethylpropylsulphonic acid, itaconic acid, maleic anhydride, maleic acid, methallylsulphonic acid, vinylsulphonic acid and salts thereof.

8. Process according to one of Claims 1 to 5, **characterized in that** the final cationic or amphoteric (co)polymer is derived from the reaction between:
- 15 to 25 wt% of glyoxal,
- a base (co)polymer branched by means of a radical branching agent and comprising:
∘ at least 5 mol% of acrylamide,
∘ at least 100 ppm of polyethyleneimine,
∘ 5 to 50 mol% of at least one unsaturated cationic ethylenic comonomer, selected from the group comprising monomers of dialkylaminoalkyl (meth)acrylamide, diallylamine, methyldiallylamine type and the quaternary ammonium or acid salts thereof, preferably diallyldimethylammonium chloride,
∘ at least 100 ppm of a radical branching agent.
